# EUROPÄISCHE PATENTSCHRIFT

(11) **EP 3 555 205 B1**
(45) Veröffentlichungstag und Bekanntmachung des Hinweises auf die Patenterteilung: **17.02.2021**
(21) Anmeldenummer: 17835463.5
(22) Anmeldetag: 14.12.2017
(51) Int. Cl.: C08L 23/08, C08L 53/02

(54) **BODENBELAG UND VERFAHREN ZU DESSEN HERSTELLUNG**
FLOORING AND METHOD OF PREPARATION
REVÊTEMENT DE SOL ET PROCÉDÉ DE PRÉPARATION

(30) Priorität: 15.12.2016 DE 102016124555
(43) Veröffentlichungstag der Anmeldung: 23.10.2019
(73) Patentinhaber: Nora Systems GmbH, 69469 Weinheim (DE)
(72) Erfinder: SCHÜLE, Hanna, 64646 Heppenheim (DE); KRÖGER, Mario, 76646 Bruchsal (DE)
(74) Vertreter: Reiser & Partner Patentanwälte mbB
(86) Internationale Anmeldenummer: PCT/EP2017/082913
(87) Internationale Veröffentlichungsnummer: WO 2018/109116

(56) Entgegenhaltungen:
- EP-A1- 1 616 923
- EP-A1- 1 793 032
- EP-A1- 2 504 389
- US-A1- 2012 277 365

## Beschreibung

Die vorliegende Erfindung betrifft einen Bodenbelag umfassend ein Flächengebilde, das eine Polymerzusammensetzung aufweist, welche einen ersten polymeren Bestandteil und einen zweiten polymeren Bestandteil umfasst, wobei der erste polymere Bestandteil wenigstens eine Substanz ausgewählt aus einer Gruppe bestehend aus einem Thermoplast und einem thermoplastischen Elastomer umfasst. Die vorliegende Erfindung betrifft darüber hinaus ein Verfahren zur Herstellung eines Bodenbelags mit folgendem Schritt: Bereitstellen eines ersten polymeren Bestandteils, umfassend wenigstens eine Substanz ausgewählt aus einer Gruppe bestehend aus einem Thermoplast und einem thermoplastisches Elastomer.

Im Stand der Technik sind Bodenbeläge aus thermoplastischen Materialien, wie z.B. PVC bekannt. Ein solcher Bodenbelag ist beispielsweise in der DE 10 2012 003 613 A1 beschrieben. Das Material PVC ist jedoch mit gravierenden Nachteilen verbunden. Beispielsweise kann im Brandfall gasförmiger Chlorwasserstoff entstehen. Darüber hinaus werden auch weitere gesundheitliche Nachteile des Materials diskutiert.

Daher sind bereits PVC-freie Bodenbeläge vorgeschlagen worden. Die WO 2011/063849 beschreibt bereits einen Bodenbelag der Substanzen wie VLDPE, POE, POP enthält. Ein weiterer PVC-freier Bodenbelag, der thermoplastisches Elastomer enthält, ist in der EP 1 793 032 A1 beschrieben.

Aus der WO 2014/0056313 A1 ist ein PVC-freier Bodenbelag mit mehreren Schichten bekannt. Der Bodenbelag weist eine thermoplastische Mischung auf, die ein Olefin-basiertes Polymer, ein Anhydrid-Copolymer sowie einen Füllstoff aufweist. Weitere Bodenbeläge sind aus der US-A-2012/277365, EP-A-1616923, EP-A-1793032 und EP-A-2504389 bekannt.

Versuche haben ergeben, dass die bekannten Bodenbeläge bei einer Verklebung mit dem Unterboden keine zufriedenstellenden Festigkeitswerte aufweisen. Zudem sind die mechanischen Eigenschaften noch nicht optimal.

Die Erfindung stellt sich demgegenüber die Aufgabe, einen Bodenbelag, der vorteilhafte mechanische Eigenschaften und gute Klebeeigenschaften aufweist, sowie ein Verfahren zu dessen Herstellung anzugeben.

Die Aufgabe wird bei einem Bodenbelag mit den Merkmalen von Anspruch 1 gelöst. Demnach ist bei dem eingangs genannten Bodenbelag vorgesehen, dass der zweite polymere Bestandteil einen unvernetzten Kautschuk umfasst und dass die Polymerzusammensetzung durch Mischen des ersten und zweiten polymeren Bestandteils ohne Vernetzung hergestellt ist.

Es hat sich gezeigt, dass mit einer Mischung, die einen Thermoplasten und/oder ein thermoplastisches Elastomer (TPE) sowie einen Kautschuk umfasst, besonders vorteilhafte Bodenbeläge erhalten werden können. Ein Kautschuk umfasst dabei unvernetzte, jedoch vernetzbare Polymere, die zu Stoffen mit gummielastischen Eigenschaften vernetzt werden können.

Vorliegend wird der Kautschuk beim Herstellen der Polymerzusammensetzung unvernetzt verwendet. Dabei können vorteilhafte mechanische Eigenschaften des Bodenbelages erhalten werden. Insbesondere lässt sich eine vorteilhafte mechanische und chemische Widerstandsfähigkeit erreichen. Der Bodenbelag ist insbesondere widerstandsfähig gegen Verschleiß und hat eine gute Abriebfestigkeit. Insbesondere kann ein solcher Bodenbelag auch unter erhöhten Beanspruchungen verwendet werden, wie sie in öffentlichen Gebäuden vorliegen. Der Bodenbelag ist leicht zu verlegen und zu reinigen. Zudem ist er maßbeständig und beständig gegen Zigarettenglut. Die Belastung durch Emissionen ist sehr gering. Auf den Einsatz von üblichen Weichmachern in der Polymerzusammensetzung kann verzichtet werden oder die verwendeten Mengen können erheblich reduziert werden. Der Bodenbelag ist zudem farbbeständig. Darüber hinaus kann der Bodenbelag gut verklebt werden. Insbesondere lassen sich bei der Verklebung gute Festigkeitswerte, wie insbesondere eine Schälfestigkeit erreichen. Außerdem kann der Bodenbelag mit einer hohen Prozesssicherheit in guter Qualität hergestellt werden. Die Mischung des ersten und des zweiten polymeren Bestandteils lässt sich insbesondere gut und sicher verarbeiten. Dies trägt zu günstigen Herstellungskosten bei. Insbesondere ist der erste polymere Bestandteil von dem zweiten polymeren Bestandteil verschieden. Vorzugsweise enthält der erste polymere Bestandteil keinen Kautschuk.

Die Aufgabe wird bei einem Verfahren mit den Merkmalen von Anspruch 16 gelöst. Demnach ist vorgesehen, dass das eingangs genannte Verfahren die folgenden weiteren Schritte aufweist:
- Bereitstellen eines zweiten polymeren Bestandteils, umfassend einen Kautschuk;
- Erweichen des ersten polymeren Bestandteils und des zweiten polymeren Bestandteils unter Zufuhr von Energie;
- Herstellen einer Polymerzusammensetzung durch Mischen des ersten polymeren Bestandteils und des zweiten polymeren Bestandteils im erweichten Zustand in einem Mischer und
- Umformen der Polymerzusammensetzung zu einem Flächengebilde, wobei der Kautschuk bei der Herstellung des Bodenbelags nicht vernetzt wird.

Die Zufuhr von Energie beim Erweichen kann z.B. durch Zufuhr von Wärme oder von Energie in anderer Weise, wie z.B. durch Scherkräfte beim Mischen erfolgen. Der erste und der zweite polymere Bestandteil können separat oder gemeinsam erweicht werden.

Nachfolgend werden weitere Merkmale der Erfindung beschrieben. Die Merkmale beziehen sich dabei sowohl auf den Bodenbelag als auch das Verfahren zur Herstellung.

Es ist vorgesehen, dass der Kautschuk bei der Herstellung des Bodenbelags nicht vernetzt wird. Daher liegt der Kautschuk im fertigen Bodenbelag als unvernetzter Kautschuk vor. Hierzu enthält die Polymerzusammensetzung kein Vernetzungssystem für den Kautschuk. Weiterhin wird bei der Herstellung kein Vulkanisierungsschritt durchgeführt. Dies trägt zu vorteilhaften mechanischen Eigenschaften und guten Klebeeigenschaften bei.

Eine bevorzugte Ausgestaltung der Erfindung sieht vor, dass der Kautschuk des zweiten polymeren Bestandteils wenigstens eine Substanz ausgewählt aus der Gruppe bestehend aus Styrol-Butadien-Kautschuk (SBR), Naturkautschuk (NR), Isopren-Kautschuk (IR), Butadien-Kautschuk (BR), Ethylen-Propylen-Kautschuk (EPM), Ethylen-Propylen-Dien-Kautschuk (EPDM), Acrylat-Kautschuk (ACM), Ethylen-Acrylat-Kautschuk (AEM), Acrylnitril-Butadien-Kautschuk (NBR), Hydrierter Acrylnitril-Butadien Kautschuk (HNBR), Chloropren-Kautschuk (CR), Chlorsulfoniertes Polyethylen (CSM), Ethylen-Vinylacetat-Kautschuk (EVM) und Silikonkautschuk (VSI) umfasst. Auf diese Weise lassen sich besonders vorteilhafte physikalische Eigenschaften des Bodenbelags erreichen. Besonders bevorzugt umfasst der zweite polymere Bestandteil NR, NBR oder EVM sowie Mischungen hiervon.

In vorteilhafter Weise ist vorgesehen, dass der zweite polymere Bestandteil wenigstens einen polaren Kautschuk umfasst. Vorzugsweise umfasst der zweite polymere Bestandteil dabei mehr als 10 Gew% eines polaren Monomers. Mit einem polaren Kautschuk lassen sich besonders gute Eigenschaften des Bodenbelags erreichen. Dies betrifft neben den mechanischen Eigenschaften insbesondere auch die Verlegeeigenschaften und die Klebeeigenschaften.

Eine vorteilhafte Weiterbildung dieses Erfindungsgedankens sieht vor, dass der polare Kautschuk wenigstens ein Monomer ausgewählt aus der Gruppe bestehend aus Acrylnitril, Vinylacetat und Methacrylat aufweist. Besonders bevorzugt sind dabei NBR, der Acrylnitril enthält, und EVM, der Vinylacetat enthält.

Eine bevorzugte Ausgestaltung der Erfindung sieht vor, dass der erste polymere Bestandteil zwischen 30 und 98 Gewichtsanteilen bezogen auf die Summe der Polymere in der Polymerzusammensetzung ausmacht.

Eine weitere bevorzugte Ausgestaltung der Erfindung sieht vor, dass der zweite polymere Bestandteil zwischen 2 und 70 Gewichtsanteilen bezogen auf die Summe der Polymere in der Polymerzusammensetzung ausmacht.

Eine vorteilhafte Ausgestaltung der Erfindung sieht vor, dass in der Polymerzusammensetzung der erste polymere Bestandteil und der zweite polymere Bestandteil vollständig miteinander vermischt sind. Insbesondere weist die Polymerzusammensetzung keine sichtbaren Partikel des ersten oder zweiten polymeren Bestandteils auf. "Sichtbar" bezieht sich dabei auf die normale Sehkraft des menschlichen Auges ohne Hilfsmittel. Unabhängig davon kann die Polymerzusammensetzung aber weitere Substanzen aufweisen, die nicht vollständig vermischt, sondern z.B. als Partikel darin eingebettet sind. Beispiele hierfür sind Füllstoffe oder dekorative Partikel.

Eine weitere vorteilhafte Ausgestaltung sieht vor, dass der erste Bestandteil wenigstens eine Komponente A umfasst, die ein Olefin-basiertes Polymer umfasst.

Eine vorteilhafte Ausgestaltung dieses Erfindungsgedankens sieht vor, dass die Komponente A wenigstens ein Olefin-basiertes Polymer umfasst, das ausgewählt ist aus der Gruppe bestehend aus Ethylen-Vinylacetat (EVA), Ethylen-Methacrylsäure (EMA), Ethylen-Butylacrylat (EBA), Ethylen-Ethylacrylat (EEA), Very-Low-Density Polyethylen (VLDPE), Linear Low-Density Polyethylen (LLDPE), Polyolefin-Elastomer (POE), Polyethylen (PE), Polypropylen (PP), Low-Density Polyethylen (LDPE) und Polyolefin Plastomer (POP). Die vorgenannten Stoffe sind jeweils Thermoplaste. VLDPE weist eine Dichte zwischen 0,880 g/cm³ und 0,915 g/cm³ auf. LLDPE weist eine Dichte zwischen 0,915 g/cm³ und 0,925 g/cm³ auf. LDPE weist eine Dichte zwischen 0,915 g/cm³ und 0,935 g/cm³ auf. Erfindungsgemäß besonders bevorzugt sind VLDPE, EVA oder POE sowie Mischungen hiervon. Mit diesen Maßnahmen können besonders gute Klebeeigenschaften des Bodenbelags sowie eine gute mechanische Stabilität erreicht werden.

Erfindungsgemäß ist bevorzugt, dass die Komponente A zwischen 10 und 85 Gewichtsanteile bezogen auf die Summe der Polymere in der Polymerzusammensetzung ausmacht. Vorzugsweise macht die Komponente A zwischen 20 und 70 Gewichtsanteilen aus. Dies trägt zu guten Klebeeigenschaften des Bodenbelags und einer hohen Stabilität bei.

Eine bevorzugte Ausführungsform der Erfindung sieht vor, dass der erste polymere Bestandteil wenigstens eine Komponente B umfasst, die ein Polymer mit Säuregruppen und/oder Anhydridgruppen umfasst. Dies trägt ebenfalls zu vorteilhaften mechanischen Eigenschaften sowie zu guten Klebeeigenschaften sei. Vorzugsweise sind die Säuregruppen und/oder die Anhydridgruppen auf das Polymer gepfropft.

Eine vorteilhafte Ausgestaltung der Erfindung sieht dabei vor, dass das von der Komponenten B umfasste Polymer ein Polymer auf Ethylenbasis ist. Bevorzugt umfasst die Komponente B Polyethylen (PE), Low-Density Polyethylen (LDPE) oder Ethylen-Vinylacetat (EVA) oder Mischungen hiervon. Dies trägt insbesondere zu einer guten mechanischen Stabilität bei guten Klebeeigenschaften des Bodenbelags bei. Besonders bevorzugt sind dabei LDPE und EVA.

Besonders gute Klebeeigenschaften des Bodenbelags ergeben sich auch dadurch, dass das von der Komponente B umfasste Polymer Maleinsäureanhydrid-Gruppen und/oder Acrylsäure-Gruppen aufweist. Vorzugsweise sind die Maleinsäureanhydrid-Gruppen und/oder die Acrylsäuregruppen auf das Polymer gepfropft. Hierdurch werden besonders gute Klebeeigenschaften und eine hohe mechanische Stabilität des Bodenbelags erreicht. Zudem ist die Herstellung einfach und die Prozesssicherheit hoch. Besonders bevorzugt sind mit Maleinsäureanhydridgruppen gepropftes LDPE (MAH-LDPE) und mit Maleinsäureanhydridgruppen gepropftes EVA (MAH-EVA).

Eine weitere vorteilhafte Ausgestaltung sieht vor, dass bei der Komponente B die auf das Polymer gepfropften Säuregruppen und/oder Anhydridgruppen mehr als 1 Gew% der Komponente B ausmachen. Besonders bevorzugt ist dabei, wenn die Säuregruppen und/oder Anhydridgruppen mehr als 1,5 Gew% und insbesondere mehr als 2 Gew% ausmachen. Dabei ist bevorzugt, wenn die Säuregruppen und/oder Anhydridgruppen weniger als 8 Gew% ausmachen. Besonders gute Eigenschaften lassen sich erreichen, wenn die Säuregruppen und/oder Anhydridgruppen mehr als 5 Gew% ausmachen. Das gilt insbesondere dann, wenn die Säuregruppen Acrylsäuregruppen umfassen. Die genannten Pfropfungsgrade tragen zu guten Klebeeigenschaften des Bodenbelags und einer hohen Stabilität bei.

Vorzugsweise macht die Komponente B zwischen 1 und 40 Gewichtsanteilen bezogen auf die Summe der Polymere in der Polymermatrix aus. Besonders bevorzugt macht die Komponente B zwischen 5 und 35 Gewichtsanteilen aus. Dies trägt zu guten Klebeeigenschaften des Bodenbelags und einer hohen Stabilität bei.

Eine besonders bevorzugte Ausgestaltung der Erfindung sieht vor, dass der erste Bestandteil wenigstens eine Komponente C umfasst, die ein styrolbasiertes thermoplastisches Elastomer umfasst. Auch dies trägt zu guten mechanischen Eigenschaften des Bodenbelags sowie einer guten Verklebbarkeit bei.

Eine bevorzugte Ausgestaltung sieht vor, dass das styrolbasierte thermoplastische Elastomer eine Hartphase und eine Weichphase aufweist und dass die Weichphase eine Glasübergangstemperatur T_{G} aufweist, die bei minus 50°C oder höher liegt. Diese Maßnahmen tragen zu guten Klebeeigenschaften des Bodenbelags und einer hohen Stabilität bei. Die Weichphase bestimmt insbesondere die kautschukelastischen Eigenschaften der Komponente C. Die Hartphase ist insbesondere für die Formbeständigkeit und die Festigkeit des Materials verantwortlich. Die Hartphase ist zudem für die thermoplastischen Eigenschaften des thermoplastischen Elastomers maßgeblich. Vorzugsweise liegt die Glasübergangstemperatur T_{G} der Weichphase bei mehr als minus 40°C. Weiterhin ist bevorzugt, dass die Glasübergangstemperatur T_{G} der Weichphase unter plus 10°C liegt. Besonders bevorzugt liegt die Glasübergangstemperatur T_{G} der Weichphase zwischen minus 15°C und plus 10°C. Die Hartphase weist in bevorzugter Weise eine Glasübergangstemperatur T_{GH} auf, die bei über plus 90°C liegt. Die Komponente C kann insbesondere ein Blockcopolymer umfassen, wobei wenigstens ein Block die Weichphase und wenigstens ein weiterer Block die Hartphase bildet. Beispielsweise bildet bei SBS das Styrol die Hartphase, während das Butadien die Weichphase bildet. Bei SEBS bildet das Styrol die Hartphase, während das Ethylen-Butylen die Weichphase bildet. Bei SIS bildet das Styrol die Hartphase und das Isopren die Weichphase. Die Glasübergangstemperaturen T_{G} werden mit der Dynamischen Differenz-Thermoanalyse nach der DIN EN ISO 11357-2 in der am 1. Juli 2016 gültigen Fassung bestimmt. Die in der vorliegenden Anmeldung genannten Werte sind jeweils nach dem Halbstufenhöhenverfahren ermittelt.

Eine bevorzugte Ausgestaltung sieht vor, dass die Komponente C ein 1,2-verknüpftes, vinyl-ständig eingebautes Isoprenmonomer umfasst. Hierbei können besonders vorteilhafte Ergebnisse erzielt werden. Dies gilt insbesondere auch dann, wenn der Styrolgehalt der Komponente C in dem Bereich zwischen 15 und 40 Gew% liegt. Vorzugsweise sind mehr als 30% der Isoprenmonomere 1,2-verknüpft vinylständig eingebaut. Besonders bevorzugt sind mehr als 50% der Isoprenmonomere 1,2-verknüpft vinylständig eingebaut. Als besonders vorteilhaft hat sich in bestimmten Fällen erwiesen, wenn mehr als 70% der Isoprenmonomere 1,2-verknüpft vinylständig eingebaut sind. Insbesondere kann das 1,2-verknüpfte Isoprenmonomer Teil der Weichphase sein. Diese Maßnahmen tragen zu guten Klebeeigenschaften des Bodenbelags und einer hohen Stabilität bei. Zudem ermöglichen sie, eine Glasübergangstemperatur T_{G} der Weichphase in dem bevorzugten Bereich zu erhalten.

In vorteilhafter Weise kann vorgesehen sein, dass die Weichphase der Komponente C Styrol umfasst. Vorzugweise kann die Weichphase einen Styrol/Butadien-Block umfassen. Dies kann beispielsweise der Fall sein, wenn die Komponente C ein SBS der Struktur S-(S/B)-S umfasst, wobei S für einen Polystyrolblock und S/B für einen Styrol/Butadien-Copolymerblock steht. Vorzugsweise liegt der Styrolgehalt der Weichphase bei mehr als 30 Gew% bezogen auf die Weichphase. Vorzugsweise besteht der Styrol-Butadien-Block (S/B) aus 15 bis 70 Gew% Styrol und 30 bis 85 Gew% Butadien. Diese Maßnahmen tragen zu guten Klebeeigenschaften des Bodenbelags und einer hohen Stabilität bei.

Eine weitere Ausgestaltung sieht vor, dass das styrolbasierte thermoplastische Elastomer der Komponente C wenigstens eine Verbindung aus der Gruppe bestehend aus Styrol-Butadien-Styrol-Block-Copolymer (SBS), Styrol-Isopren-Styrol-Block-Copolymer (SIS), Styrol-Ethylen-Butylen-Styrol-Blockcopolymer (SEBS) und Styrol-Ethylen-Propylen-Styrol-Blockcopolymer (SEPS) umfasst. Dies trägt zu guten Klebeeigenschaften sowie einer guten mechanischen Stabilität bei. Besonders bevorzugt werden dabei SIS, SBS oder SEBS sowie Mischungen hiervon. SBS kann insbesondere vorliegen als Poly(Styrol-b-Butadien-b-Styrol). SIS kann insbesondere vorliegen als Poly(Styrol-b-Isopren-b-Styrol). SEBS kann insbesondere vorliegen als Poly(Styrol-b-Ethylen-Butadien-b-Styrol). Das SEPS kann insbesondere vorliegen als Poly(Styrol-b-Ethylen-Propylen-b-Styrol).

In vorteilhafter Weise umfasst das styrolbasierte thermoplastische Elastomer der Komponente C ein Block-Copolymer. Die Hartphase und die Weichphase liegen dann in einem Molekül vor. Auch dies trägt zu guten Klebeeigenschaften des Bodenbelags und einer hohen Stabilität bei.

Eine weitere vorteilhafte Ausgestaltung sieht vor, dass das styrolbasierte thermoplastische Elastomer einen Anteil an Diblock-Copolymer umfasst. Auch dies trägt zu guten Klebeeigenschaften des Bodenbelags und einer hohen Stabilität bei. Vorzugsweise umfasst das styrolbasierte thermoplastische Elastomer einen Anteil an Polystyrol-Diblock-Copolymer. Bevorzugt ist, wenn der Diblock-Anteil bezogen auf Komponente C mehr als 5% und besonders bevorzugt mehr als 10% beträgt. Besonders gute Eigenschaften ergeben sich bei einem Diblock-Anteil bezogen auf die Komponente C von mehr als 15%. In vorteilhafter Weise ist der Diblock-Anteil bezogen auf die Komponente C kleiner als 75%.

Eine weitere Verbesserung sieht vor, dass die Komponente C einen Styrolgehalt zwischen 15 Gew% und 80 Gew% aufweist. Vorzugsweise liegt der Styrolgehalt dabei bei mehr als 30 Gew%. Besonders bevorzugt ist dabei ein Styrolgehalt der Komponente C von mehr als 40 Gew%. Dies trägt zu guten Klebeeigenschaften des Bodenbelags und einer hohen Stabilität bei.

In vorteilhafter Weise ist vorgesehen, dass das styrolbasierte thermoplastische Elastomer eine Tri-Block Struktur S-X-S aufweist, wobei S ein Styrolblock ist und X ein Block mit bei 20°C elastomeren Eigenschaften. Vorzugsweise stellt der Styrolblock bei 20°C einen glasartigen oder kristallinen Block dar, der bei höheren Temperaturen aufschmilzt. Diese Maßnahmen tragen zu guten Klebeeigenschaften des Bodenbelags und einer hohen Stabilität bei. Hierbei können der Block X die Weichphase und die Styrolblöcke S die Hartphase des thermoplastischen Elastomers bilden. Vorzugsweise macht die Komponente C zwischen 10 und 85 Gewichtsanteilen bezogen auf die Summe der Polymere in der Polymerzusammensetzung aus. Besonders bevorzugt macht die Komponente C zwischen 30 und 70 Gewichtsanteilen aus. Dies trägt zu guten Klebeeigenschaften des Bodenbelags und einer hohen Stabilität bei.

Eine vorteilhafte Ausgestaltung sieht vor, dass die Komponente B ein Polymer mit einem Monomerbaustein umfasst, der mit einem Monomerbaustein des Olefin-basierten Polymers der Komponente A und/oder einem Monomerbaustein des styrolbasierten thermoplastischen Elastomers der Komponente C übereinstimmt. Dies trägt zu guten Klebeeigenschaften des Bodenbelags und einer hohen Stabilität bei.

Nach einer besonders vorteilhaften Ausgestaltung ist vorgesehen, dass der erste polymere Bestandteil die Komponente A, die Komponente B und die Komponente C umfasst.

Eine weitere Verbesserung sieht vor, dass beim Erweichen eine Temperatur über der Erweichungstemperatur sowohl des ersten polymeren Bestandteils als auch des zweiten polymeren Bestandteils erreicht wird. Die Erweichungstemperatur kann als die sogenannte Vicat-Erweichungstemperatur nach DIN EN ISO 306 in der am 1. Juli 2016 gültigen Form bestimmt werden.

Eine weitere Verbesserung kann dadurch erreicht werden, dass die Polymerzusammensetzung einen Füllstoff aufweist. Vorzugsweise umfasst der Füllstoff wenigstens einen Stoff ausgewählt aus der Gruppe bestehend aus Kreide, Kieselsäure, Kieselerde, Aluminiumhydroxid, Kaolin, Natrium-Aluminiumsilikat, Glasmehl und Holzmehl. Erfindungsgemäß besonders bevorzugt ist, wenn der Füllstoff Kreide umfasst. Vorzugsweise ist der Füllstoff in der Polymerzusammensetzung mit einem Gewichtsanteil zwischen 50 und 500 bezogen auf die Gesamtmenge der Polymere in der Polymerzusammensetzung enthalten. Besonders bevorzugt ist, wenn der vorgenannte Gewichtsanteil zwischen 150 und 300 liegt,

In vorteilhafter Weise umfasst die Polymerzusammensetzung Verarbeitungshilfsmittel. Vorzugsweise kann das Verarbeitungshilfsmittel Stearinsäure und/oder ein Harz, insb. ein Kohlenwasserstoffharz, umfassen. Das Verarbeitungshilfsmittel kann in der Polymerzusammensetzung insbesondere mit einem Gewichtsanteil zwischen 2 und 20 bezogen auf die Gesamtmenge der Polymere in der Polymerzusammensetzung vorgesehen sein.

Die Angaben zu Gewichtsanteilen von Bestandteilen der Polymerzusammensetzung beziehen sich, sofern nicht anders angegeben, jeweils auf die Summe der Polymere in der Polymerzusammensetzung, welche zusammen 100 Gewichtsanteile ausmachen.

Vorzugsweise umfasst die Polymerzusammensetzung ein Öl. Besonders bevorzugt ist ein synthetisches Öl. Das Öl kann in der Polymerzusammensetzung insbesondere mit einem Gewichtsanteil zwischen 1 und 50 bezogen auf die Gesamtmenge der Polymere vorgesehen sein. Das Öl trägt dazu bei, die Produkteigenschaften zu verbessern und die Verarbeitung zu erleichtern.

Vorzugsweise umfasst die Polymerzusammensetzung ein Alterungsschutzmittel.

Vorzugsweise umfasst die Polymerzusammensetzung ein Farbmittel. Vorzugsweise enthält das Farbmittel anorganische und/oder organische Pigmente. Das Farbmittel kann in der Polymerzusammensetzung insbesondere mit einem Gewichtsanteil zwischen 2 und 40 bezogen auf die Gesamtmenge der Polymere in der Polymerzusammensetzung vorgesehen sein.

Eine bevorzugte Ausgestaltung der Erfindung sieht vor, dass die Dichte der Polymerzusammensetzung zwischen 0,95 g/cm³ und 2,5 g/cm³ liegt. Dies trägt zu guten Klebeeigenschaften des Bodenbelags und einer hohen Stabilität bei. Dichten der Polymerzusammensetzung, welche über den Dichten der Polymere liegen, werden dabei unter anderem dadurch erhalten, dass die Polymerzusammensetzung Füllstoffe enthält.

Vorzugsweise enthält die Polymerzusammensetzung keine chlorhaltigen und/oder halogenhaltigen Verbindungen. Vorzugsweise ist die Polymerzusammensetzung frei von Polyvinylchlorid (PVC).

Vorzugsweise weist der Bodenbelag eine Zugfestigkeit von mehr als 6 N/mm² auf. Besonders bevorzugt ist eine Zugfestigkeit von mehr als 7,5 N/mm². Vorzugsweise weist der Bodenbelag eine Reißdehnung von mehr als 25% auf. Besonders bevorzugt liegt die Reißdehnung bei mehr als 50%. Zugfestigkeit und Reißdehnung werden im Zugversuch nach der ISO 37 (in der am 1. Juli 2016 gültigen Fassung) an S1-Prüfkörpern bei 23°C ermittelt.

Vorzugsweise weist der Bodenbelag einen Weiterreißwiderstand von mehr als 25 N/mm auf. Besonders bevorzugt liegt der Weiterreißwiderstand bei mehr als 35 N/mm. Der Weiterreißwiderstand kann nach ISO 34-1 Verfahren B Arbeitsweise A (in der am 1. Juli 2016 gültigen Fassung) ermittelt werden.

Vorzugsweise liegt die Härte Shore D des Bodenbelags zwischen 35 und 60. Besonders bevorzugt ist eine Härte Shore D zwischen 45 und 55. Die Härte Shore D kann nach der DIN ISO 7619-1 (in der am 1. Juli 2016 gültigen Fassung) ermittelt werden.

Vorzugsweise liegt die Schälfestigkeit des Bodenbelags bei mehr als 0,5 N/mm. Besonders bevorzugt ist eine Schälfestigkeit von mehr als 1,0 N/mm. Die Schälfestigkeit wird ermittelt nach EN 1372:2015. Die Verklebung kann mit dem Dispersionsklebstoff Wulff Supra-Strong auf Buchensperrholz erfolgen.

In bevorzugter Weise beträgt beim Mischen die Temperatur zwischen 100°C und 180°C. Dies ermöglicht ein Erweichen des ersten und zweiten polymeren Bestandteils und erleichtert und beschleunigt den Mischprozess.

Vorzugsweise wird beim Mischen des ersten und zweiten polymeren Bestandteils Energie zugeführt, um die ersten und zweiten polymeren Bestandteile zu erweichen. Vorzugsweise wird der erste polymere Bestandteil dabei aufgeschmolzen. Eine die Temperatur erhöhende Energiezufuhr kann durch Scherkräfte erfolgen, welche während des Mischens durch den Mischer erzeugt werden. Alternativ oder zusätzlich kann auch Wärme, z.B. durch eine Heizung vor und/oder während des Mischens zugeführt werden.

Vorzugsweise erfolgt das Mischen in einem Innenmischer und/oder in einem Mischextruder.

Vorzugsweise umfasst das Umformen ein Kalandrieren in einer Kalanderanlage.

Vorzugsweise umfasst das Umformen ein Extrudieren durch einen Breitschlitzkopf. Der Breitschlitzkopf kann insbesondere Teil einer Roller-Head-Anlage sein. Hierbei wird die Polymerzusammensetzung z.B. über einen Breitschlitzkopf in den Walzenspalt eines Kalanders gefördert. Der Kalander kalibriert das Material auf die eingestellte Enddicke.

Vorzugsweise umfasst das Verfahren nach dem Umformen ein Abkühlen des Flächengebildes. Das Abkühlen kann insbesondere mittels Kühlwalzen erfolgen.

Vorzugsweise umfasst das Umformen ein Strukturieren der Oberfläche des Flächengebildes, z.B. durch eine Prägewalze.

Eine weitere Verbesserung sieht vor, dass das Verfahren nach oder bei dem Umformen ein Aufbringen von Schmuckpartikeln umfasst.

Vorzugsweise umfasst das Verfahren nach dem Umformen ein Schleifen des Flächengebildes. Insbesondere kann die Rückseite des Flächengebildes geschliffen werden. Dies trägt zu guten Klebewerten des Bodenbelages bei.

Vorzugsweise umfasst das Verfahren nach dem Umformen ein Ablängen des Flächengebildes. Das abgelängte Flächengebilde kann dann als Platte oder als Rollenware gelagert werden.

Vorzugsweise ist das Flächengebilde bahnenförmig oder plattenförmig ausgebildet.

Vorzugsweise weist der Bodenbelag wenigstens eine Schicht, welche die Polymerzusammensetzung enthält, und wenigstens eine weitere Schicht auf. Die Schicht mit der Polymerzusammensetzung kann dabei eine Tragschicht des Bodenbelags bilden. Vorzugsweise wird bei der Herstellung die wenigstens eine weitere Schicht auf das Flächengebilde aufgebracht.

Vorzugsweise weist das Flächengebilde eine Nutzseite und eine Rückseite auf. Die Rückseite wird beim Verlegen auf einen Unterboden aufgebracht. Insbesondere kann die Rückseite mit dem Unterboden verklebt werden. Das Flächengebilde weist eine Länge und eine Breite auf, die jeweils ein Vielfaches der Dicke des Flächengebildes beträgt. Das Flächengebilde kann beispielsweise zu Rollen gerollt werden. Das Flächengebilde kann zudem als Fliesen vorliegen.

Eine Weiterbildung dieses Erfindungsgedankens sieht vor, dass die wenigstens eine weitere Schicht eine an der Nutzseite befestigte Deckschicht umfasst. Die Deckschicht kann insbesondere eine Folie aus Kunststoff umfassen. Die Deckschicht kann dabei eine Verschleißschicht des Bodenbelags bilden und auf die Tragschicht aufkaschiert sein. Vorzugsweise ist die Deckschicht transparent. Besonders bevorzugt ist, wenn die Deckschicht eine transparente lonomer-Folie ist. Insbesondere kann die Folie mit einer Adhäsionsschicht versehen sein. Das Verbinden der mit der Adhäsionsschicht versehenen Folie und der Tragschicht kann durch Auflaminieren unter Zufuhr von Wärme und Druck erfolgen. Vorzugsweise umfasst die Adhäsionsschicht wenigstens ein Olefin-basiertes Polymer, das ausgewählt ist aus der Gruppe bestehend aus Ethylen-Vinylacetat (EVA), Ethylen-Methacrylsäure (EMA), Ethylen-Butylacrylat (EBA), Ethylen-Ethylacrylat (EEA), Ethylen-Propylen-Copolymer (EPM), Very-Low-Density Polyethylen (VLDPE), Linear Low-Density Polyethylene (LLDPE), Polyolefin-Elastomer (POE) und Polyolefin Plastomer (POP).

Eine vorteilhafte Ausgestaltung sieht vor, dass die wenigstens eine weitere Schicht eine an der Rückseite der Tragschicht aufgebrachte Klebeschicht umfasst. Der Klebstoff kann dabei insbesondere vorab aufgebracht sein.

In vorteilhafter Weise ist die Klebeschicht mit einer abziehbaren Abdeckung versehen. Auf diese Weise kann der mit einer Klebeschicht versehene Bodenbelag problemlos vorab hergestellt und gelagert werden. Beim Verlegen wird die Abdeckung entfernt und der Bodenbelag kann mit einem Unterboden verklebt werden.

Vorzugsweise beträgt eine Dicke des Bodenbelags zwischen 1 mm und 10 mm.

Eine bevorzugte Ausgestaltung sieht vor, dass der erste und zweite polymere Bestandteil untereinander mischbar sind.

Vorzugsweise ist vorgesehen, dass die Komponente A, die Komponente B und die Komponente C jeweils eine unterschiedliche Zusammensetzung aufweisen.

Vorzugsweise umfasst die Komponenten A keine gepfropften Polymere.

Vorzugsweise umfasst die Komponente C keine gepfropften Polymere.

Weitere Ziele, Merkmale, Vorteile und Anwendungsmöglichkeiten der vorliegenden Erfindung ergeben sich aus der nachfolgenden Beschreibung von Ausführungsbeispielen sowie der Zeichnungen. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1:: Eine schematische perspektivische Darstellung eines erfindungsgemäßen Bodenbelags;
- Fig. 2:: eine schematische Seitenansicht einer weiteren Ausführungsform eines erfindungsgemäßen Bodenbelags;
- Fig. 3:: eine schematische Seitenansicht einer noch weiteren Ausführungsform eines erfindungsgemäßen Bodenbelags;
- Fig. 4:: eine schematische Darstellung des Herstellungsverfahrens.

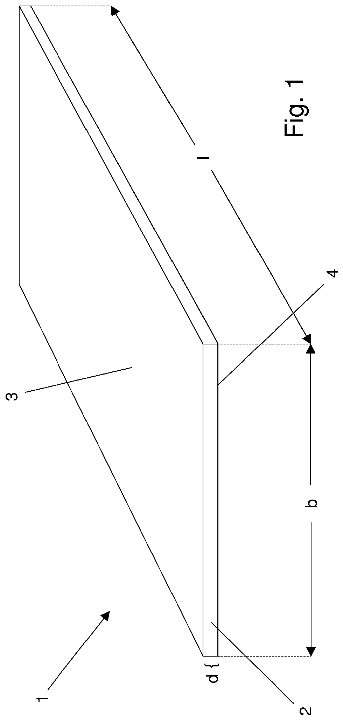

Figur 1 zeigt schematisch einen erfindungsgemäßen Bodenbelag 1. Der dargestellte Bodenbelag ist ein Flächengebilde, dessen Dicke d erheblich kleiner ist als seine Länge I und seine Breite b. Die Dicke d kann insbesondere in dem Bereich zwischen 1 und 10 mm liegen. Die Breite b und die Länge I können je nach der gewünschten Lieferform des Bodenbelages bemessen sein. Insbesondere kann der Bodenbelag als Bahnenware auf einer Rolle geliefert werden oder als Fliesen.

Der Bodenbelag 1 weist eine Tragschicht 2 mit einer unten noch näher beschriebenen Polymerzusammensetzung auf.

Die Tragschicht 2 weist eine Nutzseite 3 und eine Rückseite 4 auf. Die Nutzseite 3 ist bei der bestimmungsgemäßen Anwendung des Bodenbelages zum Raum hin angeordnet. Die Nutzseite kann als Dekorseite ausgebildet sein. Die Rückseite 4 ist zum Untergrund, zum Beispiel zum Estrich hin, ausgerichtet. Die Rückseite 4 kann mit einem Klebstoff für Bodenbeläge, insbesondere mit einem Dispersionsklebstoff, mit dem Unterboden verklebt werden.

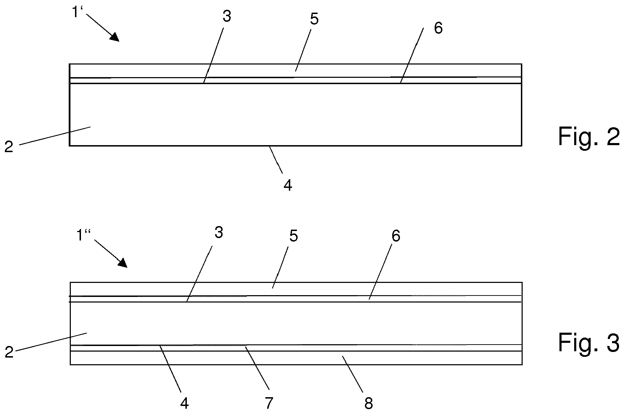

Figur 2 zeigt einen Bodenbelag 1', der wiederrum eine Tragschicht 2 aus einer Polymerzusammensetzung aufweist. Die Tragschicht 2 ist an ihrer Nutzseite 3 mit einer Deckschicht 5 versehen. Die Deckschicht 5 ist nach einer bevorzugten Ausführung eine transparente Folie. Die Deckschicht 5 ist über eine Adhäsionsschicht 6 mit der Tragschicht 2 dauerhaft verbunden. Die Deckschicht 5 ist resistent gegen übliche Beanspruchungen eines Bodenbelages. Insbesondere kann die Deckschicht 5 durch eine lonomerfolie gebildet sein. Entsprechende Folien können beispielsweise aus dem Material Surlyn 1706 von DuPont gefertigt sein. Die Adhäsionsschicht kann beispielsweise aus Nucrel 0903 von DuPont gefertigt sein. Nucrel 0903 umfasst ein Copolymer aus Ethylen und Methacrylsäure mit einem MA-Anteil von 9%. Die Deckschicht 5 und die Adhäsionsschicht 6 können insbesondere als koextrudiertes Material mit einer Dicke von etwa 200 µm bereitgestellt und unter Zufuhr von Wärme auf die vorab hergestellte Tragschicht 2 auflaminiert werden.

Die Darstellung in den Figuren dient allein der Verdeutlichung des Produktaufbaus. Die Darstellung ist nicht maßstabsgerecht.

Der in Figur 3 dargestellte Aufbau des Bodenbelages 1" stimmt für die Tragschicht 2 und die Nutzseite 3 mit demjenigen aus Figur 2 überein. Auf die entsprechende Beschreibung wird verwiesen. Zusätzlich weist der Bodenbelag 1" auf der Rückseite 4 eine vorab aufgebrachte Klebeschicht 7 auf. Die Klebeschicht 7 ist mit einer abziehbaren Abdeckung 8 versehen. Der Bodenbelag 1" kann mit einem Untergrund verklebt werden, ohne dass beim Verlegen ein Klebstoff aufgebracht werden muss. Es genügt, bei dem Verlegen die Abdeckung 8 zu entfernen und den mit der Klebeschicht 7 versehenen Bodenbelag 1" mit dem Untergrund in Kontakt zu bringen.

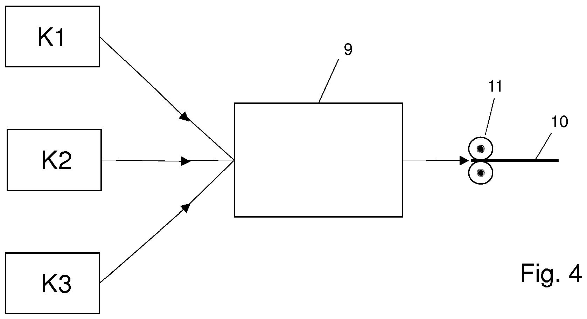

Figur 4 zeigt schematisch die Herstellung des Bodenbelages. Zunächst werden der erste und der zweite polymere Bestandteil K1 und K2 bereitgestellt. Der erste polymere Bestandteil K1 umfasst einen Thermoplasten und/oder ein thermoplastisches Elastomer. Der zweite polymere Bestandteil K2 umfasst einen Kautschuk, dessen Polymere vernetzbar, jedoch im Wesentlichen nicht vernetzt sind. Hierbei kann es sich um die in dem unten angeführten Ausführungsbeispiel angegebenen Stoffe handeln. Beispielsweise können entsprechend dem vierten Ausführungsbeispiel 35 Gewichtsanteile VLDPE und 35 Gewichtsanteile EVA bereitgestellt werden, die zusammen den ersten polymeren Bestandteil K1 bilden. Weiterhin können 30 Gewichtsanteile EVM bereitgestellt werden, die den zweiten polymeren Bestandteil K2 bilden.

Darüber hinaus werden die weiteren Bestandteile der Polymerzusammensetzung bereitgestellt. Diese sind zusammenfassend mit K3 bezeichnet. Bei den weiteren Bestandteilen kann es sich insbesondere um Füllstoffe, Verarbeitungshilfsmittel, Öl, Alterungsschutzmittel und/oder Farbmittel handeln. Beispielsweise können entsprechend dem vierten Ausführungsbeispiel 300 Gewichtsanteile Füllstoff (FS), 0,5 Gewichtsanteile Verarbeitungshilfsmittel (VHM) und 0,5 Gewichtsanteile Alterungsschutz (AS) bereitgestellt werden. Weiterhin kann, wenn das jeweilige Ausführungsbeispiel dies vorsieht, Öl bereitgestellt werden. Für das Ausführungsbeispiel 10 werden beispielsweise 4,5 Gewichtsanteile Öl bereitgestellt.

Der erste polymere Bestandteil K1 und der zweite polymere Bestandteil K2 sowie die weiteren Bestandteile K3 werden zusammen in einen Mischer 9 gegeben und intensiv durchmischt. Wenn, wie in den Ausführungsbeispielen angegeben, der erste bzw. der zweite polymere Bestandteil K1 bzw. K2 mehrere Substanzen umfasst, werden diese vorzugsweise separat, also noch nicht miteinander vermischt, in den Mischer 9 gegeben. Der Mischer 9 kann beispielsweise als Innenmischer oder als Mischextruder ausgebildet sein. Bei dem Mischen kann durch Scherkräfte die Wärme zum Erweichen des ersten und zweiten polymeren Bestandteils K1 und K2 erzeugt werden. Die Scherkräfte in dem Material werden durch den Mischvorgang erzeugt. Alternativ oder zusätzlich kann Wärme, z.B. durch eine Heizung, zugeführt werden. Vorzugsweise werden der erste und zweite polymere Bestandteil K1 und K2 soweit erweicht, dass die Polymere des ersten und zweiten Bestandteils K1 und K2 aufgeschmolzen werden. Der Mischvorgang wird durchgeführt, bis die erweichten Polymere des ersten und zweiten polymeren Bestandteils K1 und K2 eine einheitliche Masse bilden. Dabei ergibt sich ein Polymerblend. In das Polymerblend sind die Partikel des Füllstoffs eingebettet.

Die Polymerzusammensetzung wird nach dem Mischen zu einem Flächengebilde 10 umgeformt. Das Umformen kann beispielsweise durch einen Extruder mit Breitschlitzkopf und/oder durch Kalandrieren in einer Kalanderanlage 11 erfolgen. Vorzugsweise wird die Polymerzusammensetzung zunächst durch einen Extruder mit Breitschlitzkopf extrudiert und dann zusätzlich durch Kalandrieren auf die gewünschte Dicke gebracht.

Das Kalandrieren erfolgt insbesondere in einem warmen Zustand, in dem die Zusammensetzung bereits formstabil ist, jedoch noch plastisch verformt werden kann. Anschließend wird das Flächengebilde 10 abgekühlt, beispielsweise auf weniger als 60°C. Das Abkühlen kann insbesondere über Kühlwalzen erfolgen.

Das Flächengebilde 10 kann zur Erzeugung von optisch ansprechenden Bodenbelägen auf der Nutzseite 3 mit Schmuckgranulaten bestreut werden.

Das Aufbringen von Schmuckgranulaten kann insbesondere vor und/oder während des Umformens erfolgen. Die Nutzseite 3 kann zudem auch auf andere Weise mit einem Dekor versehen werden.

Sofern der Bodenbelag 1 eine weitere Schicht aufweist, kann diese auf das Flächengebilde 10 aufgebracht werden. Beispielsweise kann auf das Flächengebilde 10, welches die Tragschicht 2 bildet, eine Deckschicht 5 mit der Adhäsionsschicht 6 auflaminiert werden, um den in Figur 2 dargestellten Bodenbelag zu erhalten. Darüber hinaus kann eine Klebeschicht 7 und eine Abdeckung 8 auf der Rückseite aufgebracht werden, um den in Figur 3 dargestellten Bodenbelag zu erhalten.

Zur Erzielung einer verbesserten Klebehaftung kann die Rückseite 4 geschliffen werden. Sofern der Bodenbelag mit einer Klebeschicht 7 versehen wird, erfolgt das Schleifen vor dem Aufbringen der Klebeschicht 7.

Nachfolgend wird eine Reihe von Beispielen für die Polymerzusammensetzung beschrieben. Darüber hinaus ist für jedes Beispiel eine Schälfestigkeit angegeben. Die Schälfestigkeit ist nach der Norm EN1372:2015 ermittelt. Die Verklebung erfolgt dabei mit dem Dispersionsklebstoff Wulff Suprastrong auf Buchensperrholz. Weiterhin angegeben sind jeweils die Zugfestigkeit und die Reißdehnung. Diese werden im Versuch nach Norm ISO 37 an S1 -Prüfkörpern bei 23°C ermittelt. Zudem enthalten die Tabellen Angaben zum Weiterreißwiderstand, der nach der Norm ISO 34-1 Verfahren B, Arbeitsweise A ermittelt ist. Die Härte Shore D ist nach der Norm DIN ISO 7619-1 ermittelt. Die Viskosität ist als Schmelze-Volumenfließrate (MVR) nach der Norm DIN EN ISO 1133 ermittelt. Die Angaben beziehen sich jeweils auf die Normen in der am 1. Juli 2016 gültigen Fassung. Die Glasübergangstemperatur T_{G} ist nach der DIN EN ISO 11357-2 in der am 1. Juli 2016 gültigen Fassung bestimmt. Die genannten Werte sind jeweils nach dem Halbstufenhöhenverfahren ermittelt.

Bestandteile der beispielhaft angegebenen Polymerzusammensetzung sind die folgenden Komponenten:

### Erster polymerer Bestandteil K1

Nachfolgend werden verschiedene Substanzen beschrieben, die in den Ausführungsbeispielen alleine oder zusammen den ersten polymeren Bestandteil bilden können. Die Substanzen können dabei in drei Gruppen eingeordnet werden, die als Komponente A, Komponente B und Komponente C bezeichnet sind.

### Komponente A

K1-VLDPE bezeichnet ein VLDPE. Das Produkt ist unter dem Namen Clearflex CL DO (Versalis) erhältlich. Die Dichte beträgt 0,90 g/cm³. Die Schmelze-Volumenfließrate MVR (190°) liegt bei 3g/10min.

K1-EVA bezeichnet ein EVA, das unter dem Produktnamen GreenFlex ML 50 (Versalis) erhältlich ist. Der Anteil an Vinylacetat (VA) liegt bei 19%. Die Dichte beträgt 0,94 g/cm³. Die Schmelze-Volumenfließrate MVR (190°) liegt bei 2,5g/10min.

K1-POE bezeichnet ein POE, das unter dem Produktnamen Exact 8210 (Exxon) erhältlich ist. Das Produkt enthält ein Ethylen-Octen-Copolymer. Die Dichte beträgt 0,882g/cm³. Die Schmelze-Volumenfließrate MVR (190°) liegt bei 10g/10min.

### Komponente B

K1-MAH-LDPE bezeichnet ein mit Maleinsäureanhydrid (MAH) gepropftes LDPE. Das Produkt ist unter dem Produktnamen Fusabond E226 (DuPont) erhältlich. Das LDPE ist mit 1 Gew% MAH gepropft. Die Dichte beträgt 0,93g/cm³. Die Schmelze-Volumenfließrate MVR (190°) liegt bei 1,5g/10min.

### Komponente C

K1-SIS bezeichnet ein thermoplastisches Elastomer umfassend Styrol-Isopren-Styrol (SIS). Das Produkt ist unter dem Produktnamen Hybrar 5127 (Kuraray) erhältlich. SIS 1 enthält 1,2-verknüpfte, vinylständig eingebaute Isoprenmonomere. Der Anteil vinylständiger Isoprengruppen beträgt mehr als 70%. Die Glasübergangstemperatur T_{G} der Weichphase beträgt plus 8°C. Die Dichte beträgt 0,94g/cm³. Die Schmelze-Volumenfließrate MVR (190°) liegt bei 5g/10min. Der Styrolanteil beträgt 20%.

K1-SBS bezeichnet ein SBS. Dieses ist unter dem Produktnamen Styroflex 2 G 66 (Styrolution) erhältlich. Der Styrolanteil liegt bei 60%. Die Glasübergangstemperatur T_{G} der Weichphase beträgt minus 39°C. Die Dichte beträgt 1,0g/cm³. Die Schmelze-Volumenfließrate MVR (200°) liegt bei 13g/10min.

### Zweiter polymerer Bestandteil K2

K2-NBR1 bezeichnet ein NBR, das unter dem Produktnamen Krynac 3345 (Arlanxeo) erhältlich ist. Der Anteil an Acrylnitril beträgt 33%. Die Dichte beträgt 0,97g/cm³. Die Mooney Viskosität (ML (1+4)/100°C) liegt bei 45 MU. Der Löslichkeitsparameter δ beträgt 19,0 MPa^{½}.

K2-NBR2 bezeichnet ein NBR, das unter dem Produktnamen Krynac 4975 (Arlanxeo) erhältlich ist. Der Anteil an Acrylnitril beträgt 48,5%. Die Dichte beträgt 1,0g/cm³. Die Mooney Viskosität (ML (1+4)/100°C) liegt bei 75 MU. Der Löslichkeitsparameter δ beträgt 21,1 MPa^{½}.

K2-EVM1 bezeichnet ein EVM, das unter dem Produktnamen Levapren 500 (Arlanxeo) erhältlich ist. Der Anteil an Vinylacetat beträgt 50%. Die Dichte beträgt 1,0g/cm³. Die Mooney Viskosität (ML (1+4)/100°C) liegt bei 27 MU. Der Löslichkeitsparameter δ beträgt 17,6 MPa^{½}.

K2-EVM2 bezeichnet ein EVM, das unter dem Produktnamen Levapren 800 (Arlanxeo) erhältlich ist. Der Anteil an Vinylacetat beträgt 80%. Die Dichte beträgt 1,11 g/cm³. Die Mooney Viskosität (ML (1+4)/100°C) liegt bei 28 MU. Der Löslichkeitsparameter δ beträgt 18,2 MPa^{½}.

K2-EPDM bezeichnet ein EPDM, das unter dem Produktnamen Keltan 2470 (Arlanxeo) erhältlich ist. Der Anteil an Ethylen beträgt 69%. Die Dichte beträgt 0,86g/cm³. Die Mooney Viskosität (ML (1+4)/100°C) liegt bei 25 MU. Der Löslichkeitsparameter δ beträgt 16,1 MPa^{½}.

K2-NR bezeichnet einen Naturkautschuk, der unter dem Produktnamen CV 60 (Weber & Schaer) erhältlich ist. Die Dichte beträgt 0,93g/cm³. Die Mooney Viskosität (ML (1+4)/100°C) liegt bei 60 MU. Der Löslichkeitsparameter δ beträgt 16,5 MPa^{½}.

K2-SBR bezeichnet ein SBR, das unter dem Produktnamen Europrene 1502 (Versalis) erhältlich ist. Der Styrolanteil beträgt 23,5%. Die Dichte beträgt 0,94g/cm³. Die Mooney Viskosität (ML (1+4)/100°C) liegt bei 52 MU. Der Löslichkeitsparameter δ beträgt 17,3 MPa^{½}.

### Weitere Bestandteile der Polymerzusammensetzung

FS bezeichnet einen Füllstoff. In den Rezeptbeispielen wird Kreide als Füllstoff eingesetzt.

ÖL bezeichnet ein Öl. In den Rezeptbeispielen wird synthetisches Öl verwendet.

VHM bezeichnet ein Verarbeitungshilfsmittel. In den dargestellten Beispielen wird Stearinsäure als Verarbeitungshilfsmittel eingesetzt.

AS bezeichnet ein Alterungsschutzmittel. In den Beispielen wird Irganox 1010 (BASF) als Alterungsschutzmittel eingesetzt.

In den Tabellen sind für die einzelnen Komponenten Gewichtsanteile angegeben. Die Angaben beziehen sich dabei jeweils auf die Summe der Polymere in der Polymerzusammensetzung, welche zusammen 100 Gewichtsanteile ausmachen.

Tabelle 1 zeigt die Zusammensetzungen 1 bis 7. Hiervon sind Zusammensetzung 1 und 2 Vergleichsbeispiele, während die Zusammensetzungen 3 bis 7 Ausführungsbeispiele der Erfindung sind. Die Polymerzusammensetzungen enthalten jeweils als ersten polymeren Bestandteil K1-VLDPE und K1-EVA. Die Zusammensetzungen 1 und 2 enthalten keinen Kautschuk. Die Zusammensetzungen 3 bis 7 enthalten als zweiten polymeren Bestandteil einen Kautschuk. Hierbei handelt es sich, je nach Ausführungsbeispiel um K2-NBR, K2-EVM, K2-EPDM, K2-NR oder K2-SBR. Die Ausführungsbeispiele 3 bis 7 enthalten jeweils 35 Gewichtsanteile VLDPE und 35 Gewichtsanteile K1-EVA. Somit macht der hieraus gebildete erste polymere Bestandteil 70 Gewichtsanteile aus. Auf den zweiten polymeren Bestandteil entfallen jeweils 30 Gewichtsanteile. Darüber hinaus enthalten die in Tabelle 1, wie auch die in den weiteren Tabellen dargestellten Ausführungsbeispiele, jeweils Füllstoff (FS), Verarbeitungshilfsmittel (VHM) und Alterungsschutz (AS). Die Zusammensetzung 1 wie auch die in den weiteren Tabellen beschriebenen Zusammensetzungen enthalten zudem synthetisches Öl (ÖL).

Die in dem unteren Teil der Tabelle wiedergegebenen Messwerte zeigen, dass bei den Zusammensetzungen 1 und 2 die Schälfestigkeit mit 0,2 N/mm sehr gering ist. Die Schälfestigkeit ist ein Maß für die Klebeeigenschaften des Bodenbelags. Für eine gute Haftung des Bodenbelags am Unterboden ist es erwünscht, dass die Schälfestigkeit bei 0,5 N/mm oder mehr liegt. Die Ausführungsbeispiele 3 bis 7 zeigen, dass die Bodenbeläge aus den Zusammensetzungen, welche einen Kautschuk enthalten, eine erheblich verbesserte Schälfestigkeit aufweisen. Gut erkennbar ist in der Tabelle 1 weiterhin, dass die Zusammensetzungen 3 bis 7 gegenüber den Zusammensetzungen 1 und 2 auch verbesserte mechanische Eigenschaften aufweisen. So wird insbesondere die Reißdehnung verbessert.

**Tabelle 1**

| | **1** | **2** | **3** | **4** | **5** | **6** | **7** |
|---|---|---|---|---|---|---|---|
| **K1 - VLDPE** | 50 | 50 | 35 | 35 | 35 | 35 | 35 |
| **K1 - EVA** | 50 | 50 | 35 | 35 | 35 | 35 | 35 |
| **K2 - NBR** | | | 30 | | | | |
| **K2 - EVM** | | | | 30 | | | |
| **K2 - EPDM** | | | | | 30 | | |
| **K2 - NR** | | | | | | 30 | |
| **K2 - SBR** | | | | | | | 30 |
| **FS** | 300 | 300 | 300 | 300 | 300 | 300 | 300 |
| **ÖL** | 4,5 | 0 | 0 | 0 | 0 | 0 | 0 |
| **VHM** | 0,5 | 0,5 | 0,5 | 0,5 | 0,5 | 0,5 | 0,5 |
| **AS** | 0,5 | 0,5 | 0,5 | 0,5 | 0,5 | 0,5 | 0,5 |
| **Schälfestigkeit [N/mm]** | 0,2 | 0,2 | 1,0 | 2,3 | 0,5 | 0,6 | 0,7 |
| **Zugfestigkeit [N/mm]** | 9,1 | 10,1 | 7,1 | 6,4 | 7,0 | 5,7 | 5,3 |
| **Reißdehnung [%]** | 15 | 14 | 25 | 31 | 22 | 17 | 18 |
| **Weiterreißwiderstand [N/mm] ISO** | 37 | 39 | 38 | 32 | 38 | 30 | 28 |
| **Härte [Shore D]** | 49 | 52 | 43 | 41 | 45 | 41 | 36 |
| **MVR [cm³/10min] 190°C/21,6 kg** | 8,4 | 4,8 | <1 | 8,9 | 3,0 | 19,1 | <1 |

Tabelle 2 zeigt weitere Zusammensetzungen 8 bis 12. Hiervon ist Zusammensetzung 8 ein Vergleichsbeispiel, während die Zusammensetzungen 9 bis 12 erfindungsgemäß sind. Die Zusammensetzungen 8 bis 12 enthalten als ersten polymeren Bestandteil jeweils K1-SIS, K1-EVA, K1-POE, K1-VLDPE und K1-MAH-LDPE mit den in der Tabelle angegebenen Gewichtsanteilen. Als zweiten polymeren Bestandteil enthalten die Zusammensetzungen 9 bis 12 K2-NBR1, K2-NBR2, K2-EVM1 bzw. K2-EVM2, jeweils mit 20 Gewichtsanteilen. Insbesondere die Zusammensetzungen 9 bis 12 zeigen, dass die Schälfestigkeit erheblich verbessert wird. Hierzu trägt neben dem unvernetzten Kautschuk auch bei, dass die Zusammensetzung für den ersten polymeren Bestandteil die Komponente A, die Komponente B und die Komponente C enthält. Die Tabelle 2 zeigt weiterhin, dass sehr gute mechanische Werte des Bodenbelags, wie insbesondere Zugfestigkeit, Reißdehnung und Reißwiderstand erhalten werden. Die Werte für Reißdehnung und Weiterreißwiderstand liegen deutlich höher als bei den Ausführungsbeispielen aus Tabelle 1. Auch für die Zugfestigkeit wird mit den Werten, die durchgängig erheblich über 5 N/mm liegen, ein für Bodenbelage gut geeignetes Niveau erreicht.

**Tabelle 2**

| | **8** | **9** | **10** | **11** | **12** |
|---|---|---|---|---|---|
| **K1 - SIS** | 40 | 35 | 35 | 35 | 35 |
| **K1 - EVA** | 15 | 10 | 10 | 10 | 10 |
| **K1-POE** | 10 | 10 | 10 | 10 | 10 |
| **K1** - **VLDPE** | 15 | 10 | 10 | 10 | 10 |
| **K1 - MAH-LDPE** | 20 | 15 | 15 | 15 | 15 |
| **K2 - NBR 1** | | 20 | | | |
| **K2 - NBR 2** | | | 20 | | |
| **K2 - EVM 1** | | | | 20 | |
| **K2 - EVM 2** | | | | | 20 |
| **FS** | 300 | 300 | 300 | 300 | 300 |
| **ÖL** | 4,5 | 4,5 | 4,5 | 4,5 | 4,5 |
| **VHM** | 0,5 | 0,5 | 0,5 | 0,5 | 0,5 |
| **AS** | 0,5 | 0,5 | 0,5 | 0,5 | 0,5 |
| **Schälfestigkeit [N/mm]** | 0,9 | 2,1 | 1,8 | 3,4 | 3,3 |
| **Zugfestigkeit [N/mm]** | 10,2 | 8,3 | 8,9 | 8,4 | 9,5 |
| **Reißdehnung [%]** | 38 | 56 | 54 | 65 | 70 |
| **Weiterreißwiderstand [N/mm] ISO** | 49 | 47 | 48 | 47 | 47 |
| **Härte [Shore D]** | 49 | 52 | 48 | 43 | 41 |
| **MVR [cm³/10min] 190 °C/21,6 kg** | 7,2 | 6,3 | 9,5 | 8,6 | 8,4 |

Die Tabelle 3 zeigt Zusammensetzungen 13 bis 19. Hiervon ist 13 ein Vergleichsbeispiel, das keinen Kautschuk enthält. Die Zusammensetzungen 14 bis 19 sind Ausführungsbeispiele. Als Komponente 1 ist jeweils eine Mischung aus K1-SBS, K1-VLDPE, K1-POE, K1-EVA und K1-MAH-LDPE sowie K1-SIS vorgesehen. Damit enthalten die Zusammensetzungen jeweils die Komponenten A, B und C. Die jeweiligen Gewichtsanteile sind in der Tabelle angegeben. Die Zusammensetzungen 14 bis 19 enthalten jeweils als zweiten polymeren Bestandteil K2-NBR1 in unterschiedlichen Gewichtsanteilen. Die Tabelle 3 lässt dabei gut erkennen, dass bei den Zusammensetzungen 14 bis 19 besonders gute Klebewerte (Schälfestigkeit) des Bodenbelags erreicht werden. Diese liegen zum Teil deutlich über 1 N/mm. Sie steigen zudem mit zunehmenden Anteil des zweiten polymeren Bestandteils zunächst an (vgl. Zusammensetzungen 14 bis 17). Eine weitere Erhöhung des Gewichtsanteils des K1-NBR1 führt zu keiner weiteren Erhöhung der Schälfestigkeit, gleichwohl wird das gute Niveau aber gehalten. Die Tabelle zeigt weiterhin, dass die Zusammensetzungen 14 bis 19 auch sonst gute mechanische Eigenschaften aufweisen. So werden sehr gute Werte für die Reißdehnung erzielt. Mit zunehmendem Anteil von K1-NBR 1 ist jedoch ein gewisser Rückgang des Weiterreißwiderstands zu beobachten. Die Werte liegen gleichwohl überwiegend über 25 N/mm und damit auf einem für Bodenbeläge gut geeigneten Niveau.

Die Tabellen zeigen weiterhin, dass sich mit den Zusammensetzungen die jeweilige Shore-Härte einstellen lässt. Die Werte liegen durchgängig bei einem für Bodenbeläge geeigneten Niveau zwischen Shore D 35 und 60. Eine Reihe von Zusammensetzungen erreicht die besonders bevorzugte Härte Shore D zwischen 45 und 55.

**Tabelle 3**

| | **13** | **14** | **15** | **16** | **17** | **18** | **19** |
|---|---|---|---|---|---|---|---|
| **K1 -SBS** | 20 | 18 | 16 | 14 | 12 | 10 | 8 |
| **K1- VLDPE** | 15 | 13,5 | 12 | 10,5 | 9 | 7,5 | 6 |
| **K1-POE** | 10 | 9 | 8 | 7 | 6 | 5 | 4 |
| **K1-EVA** | 15 | 13,5 | 12 | 10,5 | 9 | 7,5 | 6 |
| **K1- MAH-LDPE** | 15 | 13,5 | 12 | 10,5 | 9 | 7,5 | 6 |
| **K1 - SIS** | 25 | 22,5 | 20 | 17,5 | 15 | 12,5 | 10 |
| **K2 - NBR 1** | | 10 | 20 | 30 | 40 | 50 | 60 |
| **FS** | 300 | 300 | 300 | 300 | 300 | 300 | 300 |
| **ÖL** | 4,5 | 4,5 | 4,5 | 4,5 | 4,5 | 4,5 | 4,5 |
| **VHM** | 0,5 | 0,5 | 0,5 | 0,5 | 0,5 | 0,5 | 0,5 |
| **AS** | 0,5 | 0,5 | 0,5 | 0,5 | 0,5 | 0,5 | 0,5 |
| **Schälfestigkeit [N/mm]** | 0,9 | 1,0 | 1,3 | 1,9 | 2,1 | 2,1 | 2,0 |
| **Zugfestigkeit [N/mm]** | 10,1 | 9,7 | 8,6 | 7,4 | 6 | 4,8 | 3,5 |
| **Reißdehnung [%]** | 58 | 83 | 74 | 53 | 59 | 56 | 91 |
| **Weiterreißwider stand [N/mm] ISO** | 47 | 45,7 | 40 | 35,1 | 29,7 | 26,6 | 22,8 |
| **Härte [Shore D]** | 52 | 51 | 48 | 45 | 39 | 34 | 28 |
| **MVR [cm³/10min] 190 °C/21,6 kg** | 20,6 | 21,6 | 12,7 | 7,9 | 4,6 | 2,6 | <1,0 |

## Patentansprüche

1. Bodenbelag umfassend ein Flächengebilde (11), das eine Polymerzusammensetzung aufweist, welche einen ersten polymeren Bestandteil (K1) und einen zweiten polymeren Bestandteil (K2) umfasst, wobei der erste polymere Bestandteil (K1) wenigstens eine Substanz ausgewählt aus einer Gruppe bestehend aus einem Thermoplast und einem thermoplastisches Elastomer umfasst, wobei der zweite polymere Bestandteil (K2) einen Kautschuk umfasst, wobei die Polymerzusammensetzung hergestellt ist durch Mischen des ersten polymeren Bestandteils (K1) und des zweiten polymeren Bestandteils (K2), wobei der Kautschuk im fertigen Bodenbelag als unvernetzter Kautschuk vorliegt.

2. Bodenbelag nach Anspruch 1, **dadurch gekennzeichnet, dass** der Kautschuk des zweiten polymeren Bestandteils (K2) wenigstens eine Substanz ausgewählt aus der Gruppe bestehend aus Styrol-Butadien-Kautschuk (SBR), Naturkautschuk (NR), Isopren-Kautschuk (IR), Butadien-Kautschuk (BR), Ethylen-Propylen-Kautschuk (EPM), Ethylen-Propylen-Dien-Kautschuk (EPDM), Acrylat-Kautschuk (ACM), Ethylen-Acrylat-Kautschuk (AEM), Acrylnitril-Butadien-Kautschuk (NBR), Hydrierter Acrylnitril-Butadien Kautschuk (HNBR), Chloropren-Kautschuk (CR), Chlorsulfoniertes Polyethylen (CSM), Ethylen-Vinylacetat-Kautschuk (EVM) und Silikonkautschuk (VSI) umfasst.

3. Bodenbelag nach Anspruch 1 oder 2, **dadurch gekennzeichnet, dass** der zweite polymere Bestandteil (K2) wenigstens einen polaren Kautschuk umfasst.

4. Bodenbelag nach Anspruch 3, **dadurch gekennzeichnet, dass** der polare Kautschuk wenigstens ein Monomer ausgewählt aus der Gruppe bestehend aus Acrylnitril, Vinylacetat und Methacrylat umfasst.

5. Bodenbelag nach einem der Ansprüche 1 bis 4, **dadurch gekennzeichnet, dass** der erste polymere Bestandteil (K1) zwischen 30 und 98 Gewichtsanteilen bezogen auf die Summe der Polymere in der Polymerzusammensetzung ausmacht.

6. Bodenbelag nach einem der Ansprüche 1 bis 5, **dadurch gekennzeichnet, dass** der zweite polymere Bestandteil (K2) zwischen 2 und 70 Gewichtsanteilen bezogen auf die Summe der Polymere in der Polymerzusammensetzung ausmacht.

7. Bodenbelag nach einem der Ansprüche 1 bis 6, **dadurch gekennzeichnet, dass** in der Polymerzusammensetzung der erste polymere Bestandteil (K1) und der zweite polymere Bestandteil (K2) vollständig miteinander vermischt sind.

8. Bodenbelag nach einem der Ansprüche 1 bis 7, **dadurch gekennzeichnet, dass** der erste polymere Bestandteil (K1) wenigstens eine Komponente A umfasst, die ein Olefin-basiertes Polymer umfasst.

9. Bodenbelag nach Anspruch 8, **dadurch gekennzeichnet, dass** die Komponente A wenigstens ein Olefin-basiertes Polymer umfasst, das ausgewählt ist aus der Gruppe bestehend aus Ethylen-Vinylacetat (EVA), Ethylen-Methacrylsäure (EMA), Ethylen-Butylacrylat (EBA), Ethylen-Ethylacrylat (EEA), Very-Low-Density Polyethylen (VLDPE), Linear Low-Density Polyethylen (LLDPE), Polyolefin-Elastomer (POE), Polyethylen (PE), Polypropylen (PP), Low-Density Polyethylen (LDPE) und Polyolefin Plastomer (POP).

10. Bodenbelag nach einem der Ansprüche 1 bis 9, **dadurch gekennzeichnet, dass** der erste polymere Bestandteil (K1) wenigstens eine Komponente B umfasst, die ein Polymer mit Säuregruppen und/oder Anhydridgruppen umfasst.

11. Bodenbelag nach einem der Ansprüche 1 bis 10, **dadurch gekennzeichnet, dass** der erste Bestandteil (K1) wenigstens eine Komponente C umfasst, die ein styrolbasiertes thermoplastisches Elastomer umfasst.

12. Bodenbelag nach Anspruch 11, **dadurch gekennzeichnet, dass** das styrolbasierte thermoplastische Elastomer eine Hartphase und eine Weichphase aufweist und dass die Weichphase eine Glasübergangstemperatur T_{G} bestimmt nach der in der Beschreibung offenbarten Methode, aufweist, die bei minus 50°C oder höher liegt.

13. Bodenbelag nach einem der Ansprüche 11 bis 12, **dadurch gekennzeichnet, dass** die Komponente C ein 1,2-verknüpftes, vinylständig eingebautes Isoprenmonomer umfasst.

14. Bodenbelag nach einem der Ansprüche 11 bis 13, **dadurch gekennzeichnet, dass** das styrolbasierte thermoplastische Elastomer der Komponente C wenigstens eine Verbindung ausgewählt aus der Gruppe bestehend aus Styrol-Butadien-Styrol-Block-Copolymer (SBS), Styrol-Isopren-Styrol-Block-Copolymer (SIS), Styrol-Ethylen- Butylen-Styrol-Blockcopolymer (SEBS) und Styrol-Ethylen-Propylen-Styrol-Blockcopolymer (SEPS) umfasst.

15. Verfahren zur Herstellung eines Bodenbelags nach einem der Ansprüche 1 bis 14 mit folgenden Schritten:
- Bereitstellen eines ersten polymeren Bestandteils (K1), umfassend wenigstens eine Substanz ausgewählt aus einer Gruppe bestehend aus einem Thermoplast und einem thermoplastisches Elastomer;
- Bereitstellen eines zweiten polymeren Bestandteils (K2), umfassend einen Kautschuk;
- Erweichen des ersten polymeren Bestandteils (K1) und des zweiten polymeren Bestandteils (K2) unter Zufuhr von Energie;
- Herstellen einer Polymerzusammensetzung durch Mischen des ersten polymeren Bestandteils (K1) und des zweiten polymeren Bestandteils (K2) im erweichten Zustand in einem Mischer;
- Umformen der Polymerzusammensetzung zu einem Flächengebilde (11),
**dadurch gekennzeichnet, dass** der Kautschuk bei der Herstellung des Bodenbelags nicht vernetzt wird.

## Claims

1. Floor covering comprising a sheet material (11) having a polymer composition comprising a first polymeric component (K1) and a second polymeric component (K2), wherein the first polymeric component (K1) comprises at least one substance selected from a group consisting of a thermoplastic and a thermoplastic elastomer, wherein the second polymeric component (K2) comprises a rubber, wherein the polymer composition is produced by mixing the first polymeric component (K1) and the second polymeric component (K2), wherein the rubber is present in the finished floor covering as non-crosslinked rubber.

2. Floor covering according to claim 1, **characterized in that** the rubber of the second polymeric component (K2) contains at least one substance selected from the group consisting of styrene butadiene rubber (SBR), natural rubber (NR), isoprene rubber (IR), butadiene rubber (BR), ethylene propylene rubber (EPM), ethylene propylene diene rubber (EPDM), acrylate rubber (ACM), ethylene acrylate rubber (AEM), acrylonitrile butadiene rubber (NBR), hydrogenated acrylonitrile butadiene rubber (HNBR), chloroprene rubber (CR), chlorosulfonated polyethylene (CSM), ethylene vinyl acetate rubber (EVM), and silicone rubber (VSI).

3. Floor covering according to claim 1 or 2, **characterized in that** the second polymeric component (K2) comprises at least one polar rubber.

4. Floor covering according to claim 3, **characterized in that** the polar rubber comprises at least one monomer selected from the group consisting of acrylonitrile, vinyl acetate and methacrylate.

5. Floor covering according to any of claims 1 to 4, **characterized in that** the first polymeric component (K1) constitutes between 30 and 98 parts by weight relative to the total of the polymers in the polymer composition.

6. Floor covering according to any of claims 1 to 5, **characterized in that** the second polymeric component (K2) constitutes between 2 and 70 parts by weight relative to the total of the polymers in the polymer composition.

7. Floor covering according to any of claims 1 to 6, **characterized in that** in the polymer composition, the first polymeric component (K1) and the second polymeric component (K2) are completely mixed with each other.

8. Floor covering according to any of claims 1 to 7, **characterized in that** the first polymeric component (K1) comprises at least one component A comprising an olefin-based polymer.

9. Floor covering according to claim 8, **characterized in that** component A comprises at least one olefin-based polymer selected from the group consisting of ethylene vinyl acetate (EVA), ethylene methacrylic acid (EMA), ethylene butyl acrylate (EBA), ethylene ethyl acrylate (EEA), very low density polyethylene (VLDPE), linear low density polyethylene (LLDPE), polyolefin elastomer (POE), polyethylene (PE), polypropylene (PP), low density polyethylene (LDPE) and polyolefin plastomer (POP).

10. Floor covering according to any of claims 1 to 9, **characterized in that** the first polymeric component (K1) comprises at least one component B comprising a polymer having acid groups and/or anhydride groups.

11. Floor covering according to any of claims 1 to 10, **characterized in that** the first component (K1) comprises at least one component C comprising a styrene-based thermoplastic elastomer.

12. Floor covering according to claim 11, **characterized in that** the styrene-based thermoplastic elastomer has a hard phase and a soft phase and **in that** the soft phase has a glass transition temperature T_{G}, determined according to the method disclosed in the description, of minus 50 °C or higher.

13. Floor covering according to any of claims 11 to 12, **characterized in that** component C comprises an isoprene monomer built in the polymer chain as 1,2-vinyl isomer.

14. Floor covering according to any of claims 11 to 13, **characterized in that** the styrene-based thermoplastic elastomer of component C comprises at least one compound selected from the group consisting of styrenebutadiene-styrene block copolymer (SBS), styrene-isoprene-styrene block copolymer (SIS), styrene-ethylene-butylene-styrene block copolymer (SEBS) and styrene-ethylene-propylene-styrene block copolymer (SEPS).

15. Method for producing a floor covering according to any of claims 1 to 14 comprising the following steps:
- providing a first polymeric component (K1) comprising at least one substance selected from a group consisting of a thermoplastic and a thermoplastic elastomer;
- providing a second polymeric component (K2) comprising a rubber;
- softening of the first polymeric component (K1) and the second polymeric component (K2) by supplying energy;
- producing a polymer composition by mixing the first polymeric component (K1) and the second polymeric component (K2) in the softened state in a mixer;
- forming the polymer composition into a sheet material (11),
**characterized in that** the rubber is not crosslinked during the production of the floor covering.

## Revendications

1. Revêtement de sol comprenant une structure plate (11), laquelle comporte une composition de polymères comprenant un premier composant polymère (K1) et un deuxième composant polymère (K2), dans lequel le premier composant polymère (K1) comprend au moins une substance sélectionnée parmi un groupe constitué d'un thermoplastique et d'un élastomère thermoplastique, dans lequel le deuxième composant polymère (K2) comprend un caoutchouc, dans lequel la composition de polymères est produite par mélange du premier composant polymère (K1) et du deuxième composant polymère (K2), dans lequel le caoutchouc existe dans le revêtement de sol fini comme caoutchouc non réticulé.

2. Revêtement de sol selon la revendication 1, **caractérisé en ce que** le caoutchouc du deuxième composant polymère (K2) comprend au moins une substance sélectionnée parmi le groupe constitué par le caoutchouc styrène-butadiène (SBR), le caoutchouc naturel (NR), le caoutchouc isoprène (IR), le caoutchouc butadiène (BR), le caoutchouc éthylène-propylène (EPM), le caoutchouc éthylène-propylène-diène (EPDM), le caoutchouc acrylate (ACM), le caoutchouc éthylène-acrylate (AEM), le caoutchouc acrylonitrile-butadiène (NBR), le caoutchouc acrylonitrile-butadiène hydrogéné (HNBR), le caoutchouc chloroprène (CR), le polyéthylène chlorosulfoné (CSM), le caoutchouc éthylène-acétate de vinyle (EVM) et le caoutchouc silicone (VSI).

3. Revêtement de sol selon la revendication 1 ou 2, **caractérisé en ce que** le deuxième composant polymère (K2) comprend au moins un caoutchouc polaire.

4. Revêtement de sol selon la revendication 3, **caractérisé en ce que** le caoutchouc polaire comprend au moins un monomère sélectionné parmi le groupe constitué par l'acrylonitrile, l'acétate de vinyle et le méthacrylate.

5. Revêtement de sol selon l'une des revendications 1 à 4, **caractérisé en ce que** le premier composant polymère (K1) représente entre 30 et 98 parties en poids par rapport à la somme des polymères dans la composition de polymères.

6. Revêtement de sol selon l'une des revendications 1 à 5, **caractérisé en ce que** le deuxième composant polymère (K2) représente entre 2 et 70 parties en poids par rapport à la somme des polymères dans la composition de polymères.

7. Revêtement de sol selon l'une des revendications 1 à 6, **caractérisé en ce que** dans la composition de polymères, le premier composant polymère (K1) et le deuxième composant polymère (K2) sont complètement mélangés l'un à l'autre.

8. Revêtement de sol selon l'une des revendications 1 à 7, **caractérisé en ce que** le premier composant polymère (K1) comprend au moins un composant A, lequel comprend un polymère à base d'oléfine.

9. Revêtement de sol selon la revendication 8, **caractérisé en ce que** le composant A comprend au moins un polymère à base d'oléfine, lequel est sélectionné parmi le groupe constitué par l'éthylène-acétate de vinyle (EVA), l'éthylène-acide méthacrylique (EMA), l'éthylène-acrylate de butyle (EBA), l'éthylène-acrylate d'éthyle (EEA), le polyéthylène très basse densité (VLDPE), le polyéthylène linéaire de basse densité (LLDPE), l'élastomère polyoléfinique (POE), le polyéthylène (PE), le polyéthylène de basse densité (LDPE) et la polyoléfine plastomère (POP).

10. Revêtement de sol selon l'une des revendications 1 à 9, **caractérisé en ce que** le premier composant polymère (K1) comprend au moins un composant B, lequel comprend un polymère doté de groupes acide et/ou de groupes anhydride.

11. Revêtement de sol selon l'une des revendications 1 à 10, **caractérisé en ce que** le premier composant (K1) comprend au moins un composant C, lequel comprend un élastomère thermoplastique à base de styrène.

12. Revêtement de sol selon la revendication 11, **caractérisé en ce que** l'élastomère thermoplastique à base de styrène comprend une phase dure et une phase molle et **en ce que** la phase molle présente une température de transition vitreuse T_{G}, déterminée selon la méthode révélée dans la description, qui est supérieure ou égale à moins 50 °C.

13. Revêtement de sol selon l'une des revendications 11 à 12, **caractérisé en ce que** le composant C comprend un monomère isoprène incorporé dans la chaîne polymère sous forme d'isomère 1,2-vinylique.

14. Revêtement de sol selon l'une des revendications 11 à 13, **caractérisé en ce que** l'élastomère thermoplastique à base de styrène du composant C comprend au moins un composé sélectionné parmi le groupe constitué par le copolymère en bloc styrène-butadiène-styrène (SBS), le copolymère en block styrène-isoprène-styrène (SIS), le copolymère en bloc styrène-éthylène-butylène-styrène (SEBS) et le copolymère en bloc styrène-éthylène-propylène-styrène (SEPS).

15. Procédé de production d'un revêtement de sol selon l'une des revendications 1 à 14 avec les étapes suivantes :
- provision d'un premier composant polymère (K1) comprenant au moins une substance sélectionnée parmi un groupe constitué d'un thermoplastique et d'un élastomère thermoplastique ;
- provision d'un deuxième composant polymère (K2) comprenant un caoutchouc ;
- ramollissement du premier composant polymère (K1) et du deuxième composant polymère (K2) par apport d'énergie ;
- production d'une composition de polymères par mélange du premier composant polymère (K1) et du deuxième composant polymère (K2) à l'état ramolli dans un mélangeur ;
- mise en forme de la composition de polymères en une structure plate (11),
**caractérisé en ce que** le caoutchouc n'est pas réticulé lors de la production du revêtement de sol.
